# EUROPÄISCHE PATENTSCHRIFT

(11) **EP 4 560 268 B1**
(45) Veröffentlichungstag und Bekanntmachung des Hinweises auf die Patenterteilung: **20.05.2026**
(21) Anmeldenummer: 23211749.9
(22) Anmeldetag: 23.11.2023
(51) Int. Cl.: G01D 5/20

(54) **RESOLVER**
RESOLVER
RÉSOLVEUR

(43) Veröffentlichungstag der Anmeldung: 28.05.2025
(73) Patentinhaber: Dr. Johannes Heidenhain GmbH, 83301 Traunreut (DE)
(72) Erfinder: Schück, Adrian, 83627 Warngau (DE)
(74) Vertreter: Hofmann, Ernst

(56) Entgegenhaltungen:
- EP-A1- 1 667 313
- DE-A1- 102009 020 327
- DE-A1- 102014 224 081

## Beschreibung

### GEBIET DER TECHNIK

Die Erfindung betrifft ein Resolver mit modularem Aufbau gemäß dem Patentanspruch 1.

Als Resolver bezeichnet man in der Elektrotechnik einen elektromagnetischen Messumformer zur Umwandlung der Winkellage eines Rotors in eine elektrische Größe bzw. in elektrische Signale. Der Begriff Resolver umfasst in dieser Anwendung auch Messumformer, die als Synchro oder Drehmelder oder als RVDT (rotary variable differential transformer) bezeichnet werden.

Häufig sind bei einem bürstenlosen Resolver in einem Gehäuse mehrere Wicklungen angeordnet. Diese Wicklungen umfassen zum einen Resolverwicklungen, bestehend aus Statorwicklungen und Rotorwicklungen und zum anderen Transformatorwicklungen, welche auf dem Rotor sowie auf dem Stator angeordnet sind. Um einen unerwünschten Magnetfluss zwischen Resolverwicklungen und Transformatorwicklungen zu minimieren, befinden sich die Resolverwicklungen in einem ersten distalen Bereich des Resolvers, während sich die Transformatorwicklungen möglichst weit entfernt, im gegenüberliegenden zweiten distalen Bereich des Resolvers befinden.

Solche Resolver werden in der Regel in großen Stückzahlen hergestellt, so dass eine einfache und möglichst vollautomatische Fertigung erwünscht ist.

### STAND DER TECHNIK

Aus der Offenlegungsschrift EP1667313 A1 ist ein Resolver bekannt, welcher eine einteilige Rotornabe und ein mehrteiliges Statorgehäuse umfasst, wobei Rotornabe und Statorgehäuse aus einem identischen Werkstoff gefertigt sind. Magnetische Störeinflüsse zwischen Resolverwicklungen sowie Transformatorwicklungen werden über eine zusätzliche Abschirmstruktur minimiert.

Ein solcher Aufbau hat Nachteile hinsichtlich der Messgenauigkeit und ist zudem nur mit relativ großem Aufwand herzustellen bzw. zu montieren.

Die DE 10 2009 020 327 A1 offenbart einen Resolver zur Bestimmung der relativen Winkellage zwischen zwei Baueinheiten. Der Resolver umfasst ein Resolvergehäuse, in dessen Innerem Transformatorwicklungen angeordnet sind, die von einem Transformatorkern in Form ineinandergreifender Gehäuseschalen umgeben sind.

### ZUSAMMENFASSUNG DER ERFINDUNG

Der Erfindung liegt die Aufgabe zugrunde ein Resolver zu schaffen, welcher eine vergleichsweise erhöhte Messgenauigkeit aufweist und sich zusätzlich vergleichsweise optimal in großen Stückzahlen fertigen lässt.

Diese Aufgabe wird erfindungsgemäß durch die Merkmale des Anspruchs 1 gelöst. Vorteilhafte Ausgestaltungen und Weiterbildungen sind in den jeweils abhängigen Ansprüchen angegeben.

Der erfindungsgemäße Resolver umfasst zwei um eine Achse relativ zueinander drehbare Baueinheiten, wobei der Resolver zur Bestimmung der relativen Winkellage zwischen den beiden Baueinheiten geeignet ist. Zumindest eine der beiden Baueinheiten weist mehrere Resolverwicklungen und Transformatorwicklungen auf. Die erste Baueinheit umfasst ein erstes Gehäuseelement und ein zweites Gehäuseelement. Die zweite Baueinheit umfasst ein erstes Nabenelement und ein zweites Nabenelement. Das ersten und zweite Gehäuseelement sind an zumindest einer Verbindungsstelle, welche sich in die Umfangsrichtung des ersten und zweiten Gehäuseelements erstreckt, miteinander gekoppelt bzw. miteinander verbunden. Ergänzend oder alternativ sind auch das erste und zweite Nabenelement an zumindest einer weiteren Verbindungsstelle, welche sich in die Umfangsrichtung des ersten und zweiten Nabenelements erstreckt, miteinander gekoppelt. Das erste Gehäuseelement und ergänzend das erste Nabenelement sind aus einem ersten Material hergestellt. Zusätzlich sind das zweite Gehäuseelement und ergänzend das zweite Nabenelement aus einem zweiten Material hergestellt, wobei das erste Material ein amagnetischer Werkstoff und das zweite Material ein magnetischer Werkstoff ist.

Die Kopplung zwischen dem ersten und zweiten Gehäuseelement bzw. zwischen dem ersten und zweiten Nabenelement verhindert insbesondere eine axiale Verschiebung der miteinander gekoppelten Elemente. Es soll dabei eine relative axiale Verschiebung von erstem Gehäuseelement zum zweiten Gehäuseelement verhindert werden bzw. eine relative axiale Verschiebung von erstem Nabenelement zum zweiten Nabenelement.

Mit einem magnetischen Material bzw. magnetischen Werkstoff ist hierbei insbesondere ein ferromagnetischer Werkstoff gemeint, welcher eine hohe Permeabilität sowie eine geringe Remanenz aufweist.

Mit einem amagnetischen Material bzw. amagnetischen Werkstoff ist ein nicht ferromagnetischer Werkstoff gemeint, welcher weitestgehend nicht magnetisierbar ist, d. h. eine geringe Permeabilität sowie eine hohe Remanenz aufweist.

Gemäß einer vorteilhaften Weiterbildung der Erfindung ist die Kopplung zwischen dem ersten und zweiten Gehäuseelement verdrehsicher bzw. drehfest ausgebildet. Ergänzend oder alternativ ist auch bzw. nur die Kopplung zwischen dem ersten und zweiten Nabenelement verdrehsicher bzw. drehfest ausgebildet.

Mit Vorteil ist die Kopplung zwischen dem ersten und zweiten Gehäuseelement durch eine formschlüssige, kraftschlüssige und ergänzend oder alternativ stoffschlüssige Verbindungstechnik ausgebildet. Ergänzend oder alternativ ist auch bzw. nur die Kopplung zwischen dem ersten und zweiten Nabenelement durch eine formschlüssige, kraftschlüssige und ergänzend oder alternativ stoffschlüssige Verbindungstechnik ausgebildet.

Mit Vorteil sind zumindest das erste und zweite Nabenelement rotationssymmetrisch ausgebildet.

Gemäß einer vorteilhaften Weiterbildung der Erfindung sind die Transformatorwicklungen im Bereich des zweiten Gehäuseelements und des zweiten Nabenelements angeordnet und die Resolverwicklungen im Bereich des ersten Gehäuseelements und des ersten Nabenelements.

Unter dem Bereich des ersten Gehäuseelements und des ersten Nabenelements ist die Anordnung der Resolverwicklungen auf den Bauteilen selbst zu verstehen, oder eine Anordnung der Resolverwicklungen innerhalb einer Kavität, welche durch eines oder mehrerer diese Bauteile ausgebildet wird. Analog hierzu ist unter dem Bereich des zweiten Gehäuseelements und des zweiten Nabenelements eine Anordnung der Transformatorwicklungen auf den Bauteilen selbst oder eine Anordnung der Transformatorwicklungen innerhalb eines durch diese Bauteile ausgebildeten Kavität zu verstehen.

In weiterer Ausgestaltung sind die Gehäuseelemente und die Nabenelemente derart ausgebildet und angeordnet, dass zwischen den Baueinheiten ein Luftspalt ausgebildet ist und zumindest die Resolverwicklungen und die Transformatorwicklungen durch die Gehäuseelemente und die Nabenelemente von allen Seiten abgeschirmt werden.

Gemäß einem weiteren Aspekt umfasst die Erfindung eine Resolver-Baureihe. Demnach ist jeder Resolver modular aufgebaut und umfasst zwei um eine Achse relativ zueinander drehbare Baueinheiten. Jeder Resolver der Baureihe ist im Betrieb zur Bestimmung der relativen Winkellage seiner beiden Baueinheiten geeignet. Zumindest eine der beiden Baueinheiten weist stets mehrere Resolverwicklungen und Transformatorwicklungen auf. Die erste Baueinheit umfasst stets ein erstes Gehäuseelement und ein zweites Gehäuseelement. Die zweite Baueinheit umfasst stets ein erstes Nabenelement und ein zweites Nabenelement. Die ersten und zweiten Gehäuseelemente sind an zumindest einer Verbindungsstelle, welche sich in die Umfangsrichtung des ersten und zweiten Gehäuseelements erstreckt, miteinander gekoppelt. Ergänzend oder alternativ können auch das erste und zweite Nabenelement an zumindest einer weiteren Verbindungsstelle, welche sich in die Umfangsrichtung des ersten und zweiten Nabenelements erstreckt, miteinander gekoppelt sein.

Resolver innerhalb der Baureihe werden gemäß dem Baukastenprinzip zusammengebaut, wobei Teilkomponenten bedarfsabhängig aus einer Reihe an unterschiedlichen Ausführungsformen ausgewählt werden.

Zusätzliche vorteilhafte Ausgestaltungen der Erfindung sind den abhängigen Ansprüchen zu entnehmen.

### KURZE BESCHREIBUNG DER ZEICHNUNG

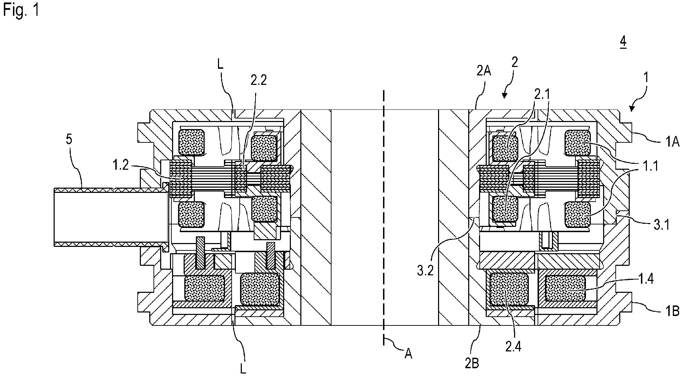

Es zeigt die
- Fig. 1: eine Längsschnittdarstellung eines Resolvers.

### BESCHREIBUNG DER AUSFÜHRUNGSFORMEN

Die Erfindung wird nachstehend auch hinsichtlich weiterer Merkmale und Vorteile anhand der Beschreibung eines Ausführungsbeispiels und unter Bezugnahme auf die beiliegende, schematische Zeichnung näher erläutert.

Der Erfindung liegt die Erkenntnis zugrunde, dass bei bürstenlosen Resolvern, bei denen innerhalb des Resolvergehäuses sowohl Transformatorwicklungen als auch Resolverwicklungen unmittelbar benachbart angeordnet sind, ein sogenanntes "Übersprechen" auftritt. Dabei wirken die elektromagnetischen Felder der Transformatorwicklungen als Störeinfluss auf die Resolverwicklungen, was Einbußen bei der Messgenauigkeit zur Folge hat. Mit der Erfindung wird nun durch geeignete Materialwahl und konstruktive Gestaltung der Gehäuse- und Nabenelemente von Stator und Rotor eine vereinfachte Herstellung sowie eine Entkopplung bzw. Abschirmung des Transformatormagnetfeldes gegenüber den Resolverwicklungen und damit eine Reduzierung des Übersprechens erreicht.

Gemäß der Fig. 1 umfasst der modular aufgebaute Resolver 4 zwei um eine Achse A drehbare Baueinheiten, nämlich einen Stator 1 als erste Baueinheit und einen Rotor 2 als zweite Baueinheit. Zwischen Stator 1 und Rotor 2 ist ein Luftspalt L ausgebildet. Der Stator 1 weist ein erstes Gehäuseelement 1A und ein zweites Gehäuseelement 1B auf, welche gegen eine relative Axialverschiebung sowie verdrehsicher miteinander gekoppelt sind. Das erste Gehäuseelement 1A umfasst eine Aufnahme für ein Blechpaket 1.2. An diesem Blechpaket 1.2 sind Resolverwicklungen 1.1, beispielsweise aus Kupferdraht, angeordnet, die als Empfängerspulen dienen. Ferner weist der Stator 1 Transformatorwicklungen 1.4 auf, welche im Bereich des zweiten Gehäuseelements 1B angeordnet sind.

Durch einen entsprechenden Resolver 4 kann die relative Winkellage zwischen dem Stator 1 und dem Rotor 2 bestimmt werden. Dazu werden die Transformatorwicklungen 1.4 des Stators 1 mit einem sinusförmigen Wechselstrom beaufschlagt, der in den Transformatorwicklungen 2.4 des Rotors 2 eine Wechselspannung mit einem vorgegebenen Transformationsverhältnis induziert. Diese Wechselspannung liegt damit dann auch an den Resolverwicklungen 2.1 des Rotors an, sodass in den Resolverwicklungen 1.1 des Stators 1, welche die Resolverwicklungen 2.1 des Rotors 2 umschließen, entsprechende Ausgangsspannungen induziert werden. Bei Verwendung von zwei um 90° versetzten Resolverwicklungen 1.1 des Stators 1 können dann zwei um 90° phasenverschobene Spannungssignale abgegriffen werden, die von der relativen Winkellage zwischen Stator 1 und Rotor 2 abhängen. Der vorliegende Resolver 4 ist somit als bürstenloser bzw. schleifringloser Resolver ausgeführt.

Die in Fig.1 nicht dargestellten elektrischen Zu- bzw. Ableitungen aus den Resolverwicklungen 1.1 und den Transformatorwicklungen 1.4 werden durch eine Bohrung bzw. eine in der Bohrung teilweise angeordnete Führungstülle 5 vom Inneren des ersten und zweiten Gehäuseelements 1A, 1B nach außen geführt.

Der Rotor 2 weist ein erstes Nabenelement 2A und ein zweites Nabenelement 2B auf, welche ebenfalls gegen eine relative Axialverschiebung sowie verdrehsicher miteinander gekoppelt sind. Im gezeigten Ausführungsbeispiel sind das erste und das zweite Nabenelement 2A, 2B mit einer Hohlwelle gekoppelt, welche beispielsweise mit einer nicht dargestellten Motorwelle, deren Winkellage zu bestimmen ist, drehfest fixiert werden kann. Das erste Nabenelement 2A umfasst eine Aufnahme für ein Blechpaket 2.2, an dem die Resolverwicklungen 2.1 angeordnet sind. Ferner weist der Rotor 2 Transformatorwicklungen 2.4 auf, welche im Bereich des zweiten Nabenelements 2B angeordnet sind. Üblicherweise werden die Resolverwicklungen 2.1 samt Blechpaket 2.2 vergossen. Die Vergussmasse ist der Übersichtlichkeit halber nicht in Fig. 1 dargestellt.

Statt dem Blechpaket 1.2 und dem Blechpaket 2.2 können auch alternative Teilkomponenten genutzt werden, welche eine Bündelung elektromagnetischer Wellen begünstigen.

Die Kopplung zwischen dem ersten Gehäuseelement 1A und dem zweiten Gehäuseelement 1B bzw. zwischen dem ersten Nabenelement 2A und dem zweiten Nabenelement 2B erfolgt beispielsweise durch eine form- und kraftschlüssige Verbindungstechnik. Vorzugsweise kommt bei der Kopplung der Gehäuseelemente 1A, 1B bzw. bei der Kopplung der Nabenelemente 2A, 2B eine stoffschlüssige Verbindungstechnik zum Einsatz, beispielsweise durch Laserschweißen oder durch Verkleben.

Bei dem in Fig. 1 gezeigten Resolver 4 handelt es sich um einen Resolver mit modularem Aufbau, d. h. dieser kann nach dem Baukastenprinzip zusammengestellt und hergestellt werden. Nahezu jede Teilkomponente des Resolvers 4 liegt in unterschiedlichen Ausführungsformen vor, wobei alle Ausführungsformen einer Teilkomponente einen vordefinierten Bauraum nicht überschreiten und weitere Standards einhalten. So können beispielsweise die Resolverwicklungen 1.1, 1.2 Ausführungsformen mit unterschiedlichen Wicklungsschemata umfassen.

Durch die gezielte Wahl der Ausführungsformen einzelner Teilkomponenten können auch vorteilhafte synergetische Effekte erzielt werden. So ist es besonders vorteilhaft, wenn das erste Gehäuseelement 1A und das zweite Gehäuseelement 1B aus unterschiedlichen Materialien bestehen und das erste Nabenelement 2A und das zweite Nabenelement 2B aus unterschiedlichen Materialien bestehen. Auf diese Weise kann die Ausbreitung des magnetischen Flusses, welcher von den stromdurchflossenen Transformatorwicklungen 1.4 und 2.4 ausgeht, innerhalb des Resolvers 4 gezielt beeinflusst werden.

Im vorliegenden Ausführungsbeispiel in Fig. 1 bestehen das erste Gehäuseelement 1A und das erste Nabenelement 2A aus einem identischen, amagnetischen, d. h. nichtmagnetischen, Werkstoff. Hierfür geeignet sind beispielsweise amagnetische Stähle, Aluminium, Aluminiumlegierungen oder Kunststoffe.

Das zweite Gehäuseelement 1B und das zweite Nabenelement 2B besteht aus einem identischen Werkstoff, welcher magnetisch ist. Hierfür geeignet sind beispielsweise magnetische Stähle.

Durch diese Ausgestaltung verbleibt das Transformator-Magnetfeld primär im Bereich der Transformatorwicklungen 1.4, 2.4, da es sich bevorzugt in das magnetische zweite Gehäuseelement 1B und das magnetische zweite Nabenelement 2B einkoppelt. Das amagnetische erste Gehäuseelement 1A und das amagnetische erste Nabenelement 2A leiten den magnetischen Fluss des Transformator-Magnetfelds kaum bis gar nicht, wodurch dieser Teil des Resolvers 4, mit den Resolverwicklungen 1.1, 1.2, magnetisch entkoppelt ist.

Auf diese Weise kann auf ein zusätzliches Abschirmelement zwischen den Transformatorwicklungen 1.4, 2.4 und den Resolverwicklungen 1.1, 2.1 verzichtet werden.

Die Gehäuseelemente 1A, 1B und die Nabenelemente 2A, 2B schirmen die Resolverwicklungen 1.1, 2.1 bzw. die Transformatorwicklungen 1.4, 2.4 ab, sodass das Innere des Resolvers 4 von allen Seiten gegen Verschmutzung geschützt ist.

Im Vorgestellten Ausführungsbeispiel sind die Gehäuseelemente 1A, 1B bzw. die Nabenelemente 2A, 2B weitestgehend rotationssymmetrisch ausgebildet und weisen weitestgehend eine identische Längserstreckung in axialer Richtung, bezüglich der Achse A, auf. Dies ermöglich die Verwendung von Halbzeugen oder Rohlingen für diese Teilkomponenten, wobei erst bei der Endverarbeitung durch Ausbilden der Teilkomponenten-spezifischen Merkmale das finale Fertigteil hergestellt wird. Auf diese Weise kann entweder ein erstes Gehäuseelement 1A oder ein zweites Gehäuseelement 1B aus einem entsprechenden Halbzeug hergestellt werden.

Alternativ kann auch das erste Gehäuseelement 1A und das erste Nabenelement 2A aus einem amagnetischen Werkstoff bestehen und das zweite Gehäuseelement 1B und das zweite Nabenelement 2B aus einem magnetischen Werkstoff. In diesem Fall wären die Resolverwicklungen 1.1, 2.1 primär gegenüber externen Störmagnetfeldern geschützt. Bei dieser alternativen Ausführungsform würde sich ein externes Störmagnetfeld in das zweite Gehäuseelement 1B und das zweite Nabenelement 2B einkoppeln und der magnetische Fluss darin verbleiben.

Ein weiterer Vorteil ist, dass die Resolver innerhalb einer Baureihe standardisiert gefertigt und zusammengebaut werden können, auch wenn einzelne Teilkomponenten der fertigen Resolver nicht identisch sind.

## Patentansprüche

1. Modular aufgebauter Resolver (4) umfassend zwei um eine Achse (A) relativ zueinander drehbare Baueinheiten (1; 2), wobei der Resolver (4) zur Bestimmung der relativen Winkellage zwischen den beiden Baueinheiten (1; 2) geeignet ist und zumindest eine der Baueinheiten (1; 2) Resolverwicklungen (1.1; 2.1) und Transformatorwicklungen (1.4; 2.4) aufweist,
wobei die erste Baueinheit (1) ein erstes Gehäuseelement (1A) und ein zweites Gehäuseelement (1B) umfasst,
wobei die zweite Baueinheit (2) ein erstes Nabenelement (2A) und ein zweites Nabenelement (2B) umfasst,
wobei das erste und zweite Gehäuseelement (1A; 1B) an zumindest einer sich in Umfangsrichtung erstreckenden Verbindungsstelle (3.1) gekoppelt sind und/oder das erste und zweite Nabenelement (2A; 2B) an zumindest einer sich in Umfangsrichtung erstreckenden weiteren Verbindungsstelle (3.2) gekoppelt sind,
wobei das erste Gehäuseelement (1A) und das erste Nabenelement (2A) aus einem ersten Material hergestellt sind und das zweite Gehäuseelement (1B) und das zweite Nabenelement (2B) aus einem zweiten Material,
wobei das erste Material ein amagnetischer Werkstoff und das zweite Material ein magnetischer Werkstoff ist.

2. Resolver gemäß Anspruch 1, wobei die Kopplung zwischen dem ersten und zweiten Gehäuseelement (1A, 1B) verdrehsicher ausgebildet ist und/oder
die Kopplung zwischen dem ersten und zweiten Nabenelement (2A, 2B) verdrehsicher ausgebildet ist.

3. Resolver gemäß zumindest einem der vorhergehenden Ansprüche,
wobei die Kopplung zwischen dem ersten und zweiten Gehäuseelement (1A, 1B) formschlüssig, kraftschlüssig und/oder stoffschlüssig ausgebildet ist und/oder
die Kopplung zwischen dem ersten und zweiten Nabenelement (2A, 2B) formschlüssig, kraftschlüssig und/oder stoffschlüssig ausgebildet ist.

4. Resolver gemäß zumindest einem der vorhergehenden Ansprüche, wobei zumindest das erste und zweite Nabenelement (2A; 2B) rotationssymmetrisch ausgebildet sind.

5. Resolver gemäß zumindest einem der vorhergehenden Ansprüche, wobei die Transformatorwicklungen (1.4; 2.4) im Bereich des zweiten Gehäuseelements (1B) und des zweiten Nabenelements (2B) angeordnet sind und die Resolverwicklungen (1.1; 2.1) im Bereich des ersten Gehäuseelements (1A) und des ersten Nabenelements (2A).

6. Resolver gemäß zumindest einem der vorhergehenden Ansprüche, wobei die Gehäuseelemente (1A; 1B) und Nabenelemente (2A; 2B) derart ausgebildet und angeordnet sind, dass zwischen den Baueinheiten (1; 2) ein Luftspalt (L) ausgebildet ist und zumindest die Resolverwicklungen und die Transformatorwicklungen durch die Gehäuseelemente (1A, 1B) und die Nabenelemente (2A, 2B) von allen Seiten abgeschirmt werden.

## Claims

1. Modular resolver (4) comprising two structural units (1; 2) which can be rotated relative to each other about an axis (A), wherein the resolver (4) is suitable for determining the relative angular position between the two structural units (1; 2) and at least one of the structural units (1; 2) has resolver windings (1.1; 1.2) and transformer windings (1.4; 2.4),
wherein the first structural unit (1) comprises a first housing element (1A) and a second housing element (1B),
wherein the second structural unit (2) comprises a first hub element (2A) and a second hub element (2B),
wherein the first and second housing element (1A; 1B) are coupled to at least one connecting point (3.1) extending in the circumferential direction and/or the first and second hub element (2A; 2B) are coupled to at least one further connecting point (3.2) extending in the circumferential direction,
wherein the first housing element (1A) and the first hub element (2A) are produced from a first material and the second housing element (1B) and the second hub element (2B) are produced from a second material,
wherein the first material is an amagnetic material and the second material is a magnetic material.

2. Resolver according to Claim 1, wherein the coupling between the first and second housing element (1A, 1B) is of torsionally secure design and/or
the coupling between the first and second hub element (2A, 2B) is of torsionally secure design.

3. Resolver according to at least one of the preceding claims, wherein the coupling between the first and second housing element (1A, 1B) is of positively locking, non-positively locking and/or integrally joined design and/or the coupling between the first and second hub element (2A, 2B) is of positively locking, non-positively locking and/or integrally joined design.

4. Resolver according to at least one of the preceding claims, wherein at least the first and second hub element (2A; 2B) are of rotationally symmetrical design.

5. Resolver according to at least one of the preceding claims, wherein the transformer windings (1.4; 2.4) are arranged in the region of the second housing element (1B) and the second hub element (2B) and the resolver windings (1.1; 2.1) are arranged in the region of the first housing element (1A) and the first hub element (2A).

6. Resolver according to at least one of the preceding claims, wherein the housing elements (1A; 1B) and hub elements (2A; 2B) are designed and arranged in such a way that an air gap (L) is formed between the structural units (1; 2) and at least the resolver windings and the transformer windings are shielded on all sides by the housing elements (1A, 1B) and the hub elements (2A, 2B).

## Revendications

1. Résolveur à structure modulaire (4) comprenant deux unités structurelles (1 ; 2) rotatives l'une par rapport à l'autre autour d'un axe (A), le résolveur (4) étant apte à déterminer la position angulaire relative entre les deux unités structurelles (1 ; 2) et au moins l'une des unités structurelles (1 ; 2) présentant des enroulements de résolveur (1.1 ; 2.1) et des enroulements de transformateur (1.4 ; 2.4),
la première unité structurelle (1) comprenant un premier élément de boîtier (1A) et un second élément de boîtier (1B),
la seconde unité structurelle (2) comprenant un premier élément de moyeu (2A) et un second élément de moyeu (2B), le premier et le second élément de boîtier (1A ; 1B) étant couplés au niveau d'au moins un point de liaison (3.1) s'étendant dans la direction circonférentielle et/ou le premier et le second élément de moyeu (2A ; 2B) étant couplés au niveau d'au moins un point de liaison supplémentaire (3.2) s'étendant dans la direction circonférentielle,
le premier élément de boîtier (1A) et le premier élément de moyeu (2A) étant fabriqués à partir d'un premier matériau et le second élément de boîtier (1B) et le second élément de moyeu (2B), à partir d'un second matériau,
le premier matériau étant un matériau amagnétique et le second matériau un matériau magnétique.

2. Résolveur selon la revendication 1, dans lequel le couplage entre le premier et le second élément de boîtier (1A, 1B) est réalisé de manière à être résistant à la torsion et/ou
le couplage entre le premier et le second élément de moyeu (2A, 2B) est réalisé de manière à être résistant à la torsion.

3. Résolveur selon au moins l'une des revendications précédentes, dans lequel le couplage entre le premier et le second élément de boîtier (1A, 1B) est réalisé par complémentarité de forme, par complémentarité de force et/ou par complémentarité de matière et/ou
le couplage entre le premier et le second élément de moyeu (2A, 2B) est réalisé par complémentarité de forme, par complémentarité de force et/ou par complémentarité de matière.

4. Résolveur selon au moins l'une des revendications précédentes, dans lequel au moins le premier et le second élément de moyeu (2A ; 2B) sont réalisés de manière à être symétriques de rotation.

5. Résolveur selon au moins l'une des revendications précédentes, dans lequel les enroulements de transformateur (1.4 ; 2.4) sont agencés dans la zone du second élément de boîtier (1B) et du second élément de moyeu (2B) et les enroulements de résolveur (1.1 ; 2.1), dans la zone du premier élément de boîtier (1A) et du premier élément de moyeu (2A).

6. Résolveur selon au moins l'une des revendications précédentes, dans lequel les éléments de boîtier (1A ; 1B) et les éléments de moyeu (2A ; 2B) sont réalisés et agencés de telle sorte qu'un entrefer (L) soit formé entre les unités structurelles (1 ; 2) et au moins les enroulements de résolveur et les enroulements de transformateur sont blindés de tous les côtés par les éléments de boîtier (1A, 1B) et les éléments de moyeu (2A, 2B).
